# EUROPEAN PATENT APPLICATION

(11) **EP 4 737 752 A1**
(43) Date of publication of application: **06.05.2026**
(21) Application number: 24831562.4
(22) Date of filing: 31.05.2024
(51) Int. Cl.: F16C 33/62, C21D 1/06, C21D 9/36, C21D 9/40, F16C 19/06, F16C 19/36, F16C 33/32, F16C 33/34, F16C 33/64

(54) **ROLLING BEARING AND DRIVE UNIT FOR VEHICLE**

(30) Priority: 28.06.2023 JP 2023106097; 28.06.2023 JP 2023106098
(71) Applicant: NTN Corporation, Osaka-shi Osaka 530-0005 (JP)
(72) Inventor: MATSUDA, Ryuutarou, Iwata-shi, Shizuoka 438-8510 (JP); KAWAI, Takashi, Iwata-shi, Shizuoka 438-8510 (JP)
(74) Representative: Bockhorni & Brüntjen Partnerschaft Patentanwälte mbB
(86) International application number: PCT/JP2024/020049
(87) International publication number: WO 2025/004692

(57) **Abstract**

A rolling bearing (100) supports a rotation shaft of a vehicle drive unit. The rolling bearing includes an inner ring (10), an outer ring (20), and a rolling element (30) which are made of steel subjected to quenching and tempering. Each of the inner ring, the outer ring, and the rolling element has a rolling surface (10da, 20ca, 30a). A dislocation density of retained austenite at a rolling surface superficial layer of at least one of the inner ring and the outer ring is 2.5×10¹⁴ m⁻² or more and 1.0×10¹⁷ m⁻² or less.

## Description

### TECHNICAL FIELD

The present invention relates to a rolling bearing and a vehicle drive unit.

### BACKGROUND ART

Japanese Patent No. 6023422 (PTL 1) describes a mechanical component. The mechanical component described in PTL 1 is a bearing ring or a rolling element constituting a rolling bearing. The mechanical component described in PTL 1 is formed by introducing nitrogen into a surface, performing quenching, and thereafter performing tempering at a high temperature.

### CITATION LIST

### PATENT LITERATURE

PTL 1: Japanese Patent No. 6023422

### SUMMARY OF INVENTION

### TECHNICAL PROBLEM

Vehicle drive units used in electrically powered vehicles such as electric vehicles (EVs) and hybrid electric vehicles (HEVs) will be required to have a higher efficiency in the future in consideration of environmental issues such as realization of carbon neutrality.

A vehicle drive unit has a plurality of rotation shafts, and each of the plurality of rotation shafts is supported by a rolling bearing. In order to achieve a higher efficiency, measures such as reducing the viscosity of a lubricating oil, reducing the amount of the oil, and reducing the number of oil pumps are taken, which may result in poor lubrication between a bearing ring and a rolling element.

As the vehicle drive unit is downsized in order to achieve a higher efficiency, the bearing that supports the rotation shaft has a smaller size. Further, in order to achieve a higher efficiency, an output of a drive source (such as a motor) of the vehicle drive unit is increased, and a rotation speed is increased. As a result, a load on the rolling bearing further increases.

In the mechanical component described in PTL 1, tempering at a high temperature is performed, and a hardness in the very vicinity of the surface decreases. Accordingly, when a rolling bearing constituted by the mechanical component described in PTL 1 is used under conditions as described above, a crack may be formed in a rolling surface (a raceway surface, a rolling contact surface) and the crack may develop.

The present invention has been made in view of the problems of the conventional technique as described above. More specifically, the present invention provides a rolling bearing capable of suppressing formation and development of a crack in a rolling surface even in the case of poor lubrication.

### SOLUTION TO PROBLEM

A rolling bearing of the present invention is a rolling bearing that supports a rotation shaft of a vehicle drive unit. The rolling bearing includes an inner ring, an outer ring, and a rolling element which are made of steel subjected to quenching and tempering. Each of the inner ring, the outer ring, and the rolling element has a rolling surface. A dislocation density of retained austenite at a rolling surface superficial layer of at least one of the inner ring and the outer ring is 2.5×10¹⁴ m⁻² or more and 1.0×10¹⁷ m⁻² or less.

### ADVANTAGEOUS EFFECTS OF INVENTION

According to the rolling bearing of the present invention, it is possible to suppress formation and development of a crack in the rolling surface even in the case of poor lubrication.

### BRIEF DESCRIPTION OF DRAWINGS

Fig. 1 is a cross sectional view of a rolling bearing 100.
Fig. 2 is a cross sectional view of rolling bearing 100 according to a modification.
Fig. 3 is a diagram of a process for manufacturing rolling bearing 100.
Fig. 4 is a cross sectional view of a vehicle drive unit 200.
Fig. 5 is a cross sectional view of vehicle drive unit 200 according to a modification.

### DESCRIPTION OF EMBODIMENTS

Details of an embodiment of the present invention will be described with reference to the drawings. In the drawings below, identical or corresponding parts will be designated by the same reference numerals, and redundant description will not be repeated. A rolling bearing according to the embodiment is referred to as a rolling bearing 100, and a vehicle drive unit according to the embodiment is referred to as a vehicle drive unit 200.

### (Configuration of Rolling Bearing 100)

Hereinafter, a configuration of rolling bearing 100 will be described.

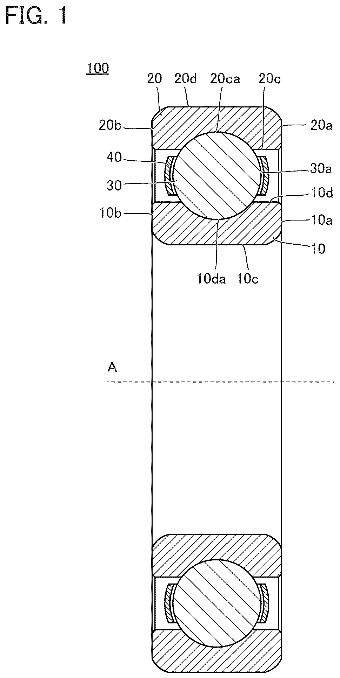

Fig. 1 is a cross sectional view of rolling bearing 100. As shown in Fig. 1, rolling bearing 100 is a deep groove ball bearing, for example. Rolling bearing 100 has an inner ring 10, an outer ring 20, a plurality of rolling elements 30, and a cage 40. A central axis of inner ring 10 is defined as a central axis A. A direction of central axis A is defined as an axial direction. A direction which passes through central axis A and is orthogonal to central axis A is defined as a radial direction. A direction along a circumference centered on central axis A when viewed along the axial direction is defined as a circumferential direction.

Inner ring 10 has an annular shape extending in the circumferential direction. Inner ring 10 has a first width surface 10a, a second width surface 10b, an inner diameter surface 10c, and an outer diameter surface 10d.

First width surface 10a and second width surface 10b are end surfaces of inner ring 10 in the axial direction. First width surface 10a faces one side in the axial direction (the right side in Fig. 1), and second width surface 10b faces the other side in the axial direction (the left side in Fig. 1). Second width surface 10b is a surface opposite to first width surface 10a in the axial direction.

Inner diameter surface 10c and outer diameter surface 10d extend in the circumferential direction. One end and the other end of inner diameter surface 10c in the axial direction are contiguous to first width surface 10a and second width surface 10b, respectively. One end and the other end of outer diameter surface 10d in the axial direction are contiguous to first width surface 10a and second width surface 10b, respectively. Inner diameter surface 10c faces an inner side in the radial direction. Outer diameter surface 10d faces an outer side in the radial direction. Outer diameter surface 10d is a surface opposite to inner diameter surface 10c in the radial direction.

Outer diameter surface 10d has a raceway surface 10da. Raceway surface 10da is a portion of outer diameter surface 10d that contacts rolling elements 30. Raceway surface 10da is recessed toward inner diameter surface 10c in a cross sectional view orthogonal to the circumferential direction. Raceway surface 10da has a partial arc shape in the cross sectional view orthogonal to the circumferential direction. Raceway surface 10da extends in the circumferential direction. Raceway surface 10da is located at a central portion of outer diameter surface 10d in the axial direction.

Outer ring 20 has an annular shape extending in the circumferential direction. Outer ring 20 has a first width surface 20a, a second width surface 20b, an inner diameter surface 20c, and an outer diameter surface 20d.

First width surface 20a and second width surface 20b are end surfaces of outer ring 20 in the axial direction. First width surface 20a faces the one side in the axial direction (the right side in Fig. 1), and second width surface 20b faces the other side in the axial direction (the left side in Fig. 1). Second width surface 20b is a surface opposite to first width surface 20a in the axial direction.

Inner diameter surface 20c and outer diameter surface 20d extend in the circumferential direction. One end and the other end of inner diameter surface 20c in the axial direction are contiguous to first width surface 20a and second width surface 20b, respectively. One end and the other end of outer diameter surface 20d in the axial direction are contiguous to first width surface 20a and second width surface 20b, respectively. Inner diameter surface 20c faces the inner side in the radial direction. Outer diameter surface 20d faces the outer side in the radial direction. Outer diameter surface 20d is a surface opposite to inner diameter surface 20c in the radial direction.

Inner diameter surface 20c has a raceway surface 20ca. Raceway surface 20ca is a portion of inner diameter surface 20c that contacts rolling elements 30. Raceway surface 20ca is recessed toward outer diameter surface 20d in a cross sectional view orthogonal to the circumferential direction. Raceway surface 20ca has a partial arc shape in the cross sectional view orthogonal to the circumferential direction. Raceway surface 20ca extends in the circumferential direction. Raceway surface 20ca is located at a central portion of inner diameter surface 20c in the axial direction.

Outer ring 20 is disposed on the outer side in the radial direction of inner ring 10 such that inner diameter surface 20c and outer diameter surface 10d face each other with a space therebetween in the radial direction (raceway surface 20ca faces raceway surface 10da with a space therebetween in the radial direction).

Rolling elements 30 are disposed between raceway surface 10da and raceway surface 20ca. Rolling elements 30 have a spherical shape. Each rolling element 30 has a surface 30a. Rolling element 30 contacts raceway surface 10da and raceway surface 20ca at surface 30a. It should be noted that raceway surface 10da, raceway surface 20ca, and surface 30a may be referred to as rolling surfaces.

Cage 40 is disposed between outer diameter surface 10d and inner diameter surface 20c. Cage 40 holds the plurality of rolling elements 30 such that a spacing between two rolling elements 30 adjacent in the circumferential direction is within a certain range.

Inner ring 10, outer ring 20, and rolling elements 30 are made of steel subjected to quenching and tempering. The steel constituting inner ring 10, outer ring 20, and rolling elements 30 is a high carbon chromium bearing steel defined in the JIS standard, for example. For example, the steel constituting inner ring 10, outer ring 20, and rolling elements 30 is SUJ2 or SUJ3 defined in the JIS standard, 52100 defined in the ASTM A295 standard, 100Cr defined in the DIN standard, or GCr5 or GCr15 defined in the GB standard.

A hardness at the rolling surface of each of inner ring 10, outer ring 20, and rolling elements 30 is preferably 800 Hv or more and 1245 Hv or less, and more preferably 865 Hv or more and 1245 Hv or less. The hardness at the rolling surface of each of inner ring 10, outer ring 20, and rolling elements 30 may be 760 Hv or more and 940 Hv or less, or may be 800 Hv or more and 940 Hv or less.

The hardness at the rolling surface of each of inner ring 10, outer ring 20, and rolling elements 30 is measured according to the Vickers hardness test method defined in the JIS standard. The hardness at the rolling surface of each of inner ring 10, outer ring 20, and rolling elements 30 is obtained by assuming a position where a distance in a depth direction from each rolling surface in a cross section perpendicular to the rolling surface is 50 µm, as a rolling surface superficial layer, and measuring a hardness at the position where the distance in the depth direction from each rolling surface in the cross section perpendicular to the rolling surface is 50 µm. The hardness at the rolling surface may be obtained by measuring Vickers hardnesses at positions where the distances in the depth direction from each rolling surface in the cross section perpendicular to the rolling surface are 50 µm, 150 µm, 250 µm, 350 µm, and 450 µm, and estimating a Vickers hardness at a position where the distance in the depth direction from each rolling surface is 0 µm, from an approximate expression (a linear or exponential expression) determined based on the Vickers hardnesses measured at these five positions.

An amount of retained austenite at the rolling surface superficial layer of each of inner ring 10, outer ring 20, and rolling elements 30 is preferably 5 volume percent or more and 30 volume percent or less, and more preferably 5 volume percent or more and 16 volume percent or less. The amount of retained austenite at the rolling surface superficial layer of each of inner ring 10, outer ring 20, and rolling elements 30 may be 2 volume percent or more and 12 volume percent or less. The amount of retained austenite at the rolling surface superficial layer of each of inner ring 10, outer ring 20, and rolling elements 30 is measured by the X-ray diffraction method, at the position where the distance in the depth direction from each rolling surface in the cross section perpendicular to the rolling surface is 50 µm. A grain size number of prior austenite grains at the rolling surface superficial layer of each of inner ring 10, outer ring 20, and rolling elements 30 is preferably 9 or more. The grain size number of prior austenite grains at the rolling surface superficial layer of each of inner ring 10, outer ring 20, and rolling elements 30 is measured according to a method defined in the JIS standard.

Surfaces of inner ring 10, outer ring 20, and rolling elements 30 are preferably subjected to nitriding treatment. In inner ring 10, outer ring 20, and rolling elements 30, a nitrogen concentration at each rolling surface superficial layer is defined as an average nitrogen concentration in a region from each rolling surface to a depth of 10 µm. The nitrogen concentration at the rolling surface superficial layer of each of inner ring 10, outer ring 20, and rolling elements 30 is preferably 0.25 mass percent or more. In inner ring 10, outer ring 20, and rolling elements 30, the nitrogen concentration at each rolling surface superficial layer is 1.0 mass percent or less, for example. It should be noted that, when the nitrogen concentration at each rolling surface superficial layer exceeds 1.0 mass percent, the amount of retained austenite exceeds 16 volume percent, and the effect of suppressing long-term dimensional change is reduced. Further, when the nitrogen concentration at each rolling surface superficial layer exceeds 1.0 mass percent, a carbon concentration may decrease due to decarburization during heat treatment, and the hardness at the rolling surface may decrease. The nitrogen concentration at the rolling surface superficial layer of each of inner ring 10, outer ring 20, and rolling elements 30 may be 0.03 mass percent or more and 0.25 mass percent or less. As the above nitrogen concentration, an average value of nitrogen concentrations from each rolling surface to a position at a depth of 10 µm is measured by performing linear analysis in the depth direction from the rolling surface in the cross section perpendicular to the rolling surface, using an electron probe micro analyzer (EPMA). The surfaces of inner ring 10, outer ring 20, and rolling elements 30 may not be subjected to nitriding treatment. From another viewpoint, in inner ring 10, outer ring 20, and rolling elements 30, the nitrogen concentration at each rolling surface superficial layer may be less than 0.01 mass percent.

A dislocation density of retained austenite at the rolling surface superficial layer of each of inner ring 10, outer ring 20, and rolling elements 30 is 2.5×10¹⁴ m⁻² or more and 1.0×10¹⁷ m⁻² or less. The dislocation density of retained austenite at the rolling surface superficial layer of each of inner ring 10, outer ring 20, and rolling elements 30 is preferably 2.5×10¹⁴ m⁻² or more and 1.0×10¹⁶ m⁻² or less, more preferably 2.5×10¹⁴ m⁻² or more and 5.0×10¹⁵ m⁻² or less, and particularly preferably 2.5×10¹⁴ m⁻² or more and 1.0×10¹⁵ m⁻² or less. Further, the dislocation density of retained austenite at the rolling surface superficial layer of each of inner ring 10, outer ring 20, and rolling elements 30 may be 3.5×10¹⁴ m⁻² or more and 1.0×10¹⁷ m⁻² or less, may be 3.5×10¹⁴ m⁻² or more and 1.0×10¹⁶ m⁻² or less, or may be 3.5×10¹⁴ m⁻² or more and 5.0×10¹⁵ m⁻² or less. Further, the dislocation density of retained austenite at the rolling surface superficial layer of each of inner ring 10, outer ring 20, and rolling elements 30 may be 5.0×10¹⁴ m⁻² or more and 1.0×10¹⁷ m⁻² or less, may be 5.0×10¹⁴ m⁻² or more and 1.0×10¹⁶ m⁻² or less, or may be 5.0×10¹⁴ m⁻² or more and 1.0×10¹⁵ m⁻² or less.

The dislocation density of retained austenite at the rolling surface superficial layer of each of inner ring 10, outer ring 20, and rolling elements 30 is measured at the rolling surface, using a cobalt tube type X-ray diffraction apparatus. More specifically, the dislocation density of retained austenite at the rolling surface superficial layer is calculated by measuring an X-ray profile with the cobalt tube type X-ray diffraction apparatus, separating a half value width obtained from the X-ray profile into a crystallite size and a strain, and applying the Williamson-Hall equation. It should be noted that the dislocation density of retained austenite is calculated using a strain obtained by performing Rietveld analysis on peaks of X-ray profiles corresponding to a (111) plane, a (200) plane, a (220) plane, a (311) plane, and a (222) plane. It should be noted that accuracy of measuring the dislocation density is improved by using Rietveld analysis, and an apparatus constant is considered when Rietveld analysis is performed. A position for measurement may be an arbitrary point at the rolling surface superficial layer of each of inner ring 10, outer ring 20, and rolling elements 30, or may be an arbitrary point where a distance in the depth direction from each rolling surface in the cross section perpendicular to the rolling surface is up to 50 µm.

### <Modification>

Although an example of a case where the hardness at the rolling surface of each of inner ring 10, outer ring 20, and rolling elements 30 is 800 Hv or more and 1245 Hv or less (760 Hv or more and 940 Hv or less) has been described above, it is only necessary that the hardness at the rolling surface of at least one of inner ring 10, outer ring 20, and rolling elements 30 is 800 Hv or more and 1245 Hv or less (760 Hv or more and 940 Hv or less). Further, although an example of a case where the amount of retained austenite at the rolling surface superficial layer of each of inner ring 10, outer ring 20, and rolling elements 30 is 5 volume percent or more and 30 volume percent or less has been described above, it is only necessary that the amount of retained austenite at the rolling surface superficial layer of at least one of inner ring 10, outer ring 20, and rolling elements 30 is 5 volume percent or more and 30 volume percent or less.

Although an example of a case where the dislocation density of retained austenite at the rolling surface superficial layer of each of inner ring 10, outer ring 20, and rolling elements 30 is 2.5×10¹⁴ m⁻² or more and 1.0×10¹⁷ m⁻² or less (3.5×10¹⁴ m⁻² or more and 1.0×10¹⁷ m⁻² or less) has been described above, it is only necessary that the dislocation density of retained austenite at the rolling surface superficial layer of at least one of inner ring 10, outer ring 20, and rolling elements 30 is 2.5×10¹⁴ m⁻² or more and 1.0×10¹⁷ m⁻² or less (3.5×10¹⁴ m⁻² or more and 1.0×10¹⁷ m⁻² or less). Further, although a case where the nitrogen concentration at the rolling surface superficial layer of each of inner ring 10, outer ring 20, and rolling elements 30 is 0.25 mass percent or more (0.03 mass percent or more and 0.25 mass percent or less) has been described above, it is only necessary that the nitrogen concentration at the rolling surface superficial layer of at least one of inner ring 10, outer ring 20, and rolling elements 30 is 0.25 mass percent or more (0.03 mass percent or more and 0.25 mass percent or less).

Although the above example has described a case where the amount of retained austenite at the rolling surface superficial layer of each of inner ring 10, outer ring 20, and rolling elements 30 is 2 volume percent or more and 12 volume percent or less, it is only necessary that the amount of retained austenite at the rolling surface superficial layer of at least one of inner ring 10, outer ring 20, and rolling elements 30 is 2 volume percent or more and 12 volume percent or less. Further, although the above example has described a case where the dislocation density of retained austenite at the rolling surface superficial layer of each of inner ring 10, outer ring 20, and rolling elements 30 is 5.0×10¹⁴ m⁻² or more and 1.0×10¹⁷ m⁻² or less, it is only necessary that the dislocation density of retained austenite at the rolling surface superficial layer of at least one of inner ring 10, outer ring 20, and rolling elements 30 is 5.0×10¹⁴ m⁻² or more and 1.0×10¹⁷ m⁻² or less. Although the above example has described a case where the nitrogen concentration at the rolling surface superficial layer of each of inner ring 10, outer ring 20, and rolling elements 30 is less than 0.01 mass percent, it is only necessary that the nitrogen concentration at the rolling surface superficial layer of at least one of inner ring 10, outer ring 20, and rolling elements 30 is less than 0.01 mass percent.

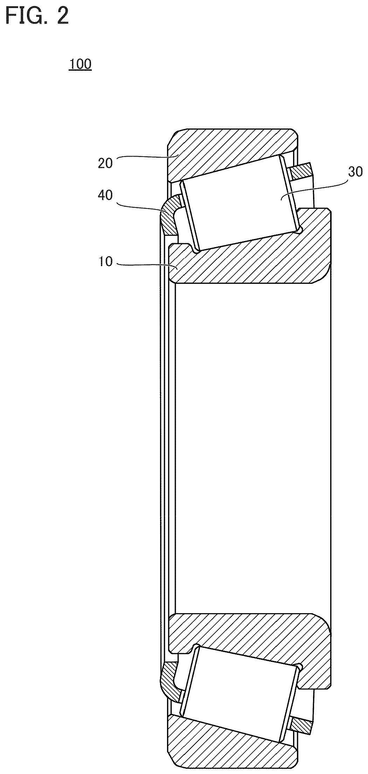

Fig. 2 is a cross sectional view of rolling bearing 100 according to a modification. As shown in Fig. 2, rolling bearing 100 may be a tapered roller bearing.

### (Method for Manufacturing Rolling Bearing 100)

Hereinafter, a method for manufacturing rolling bearing 100 will be described.

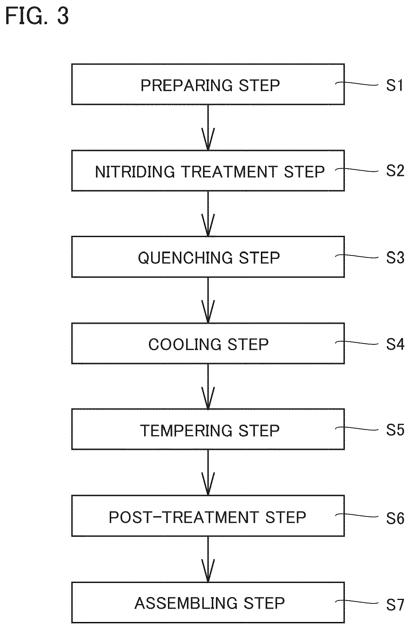

Fig. 3 is a diagram of a process for manufacturing rolling bearing 100. As shown in Fig. 3, the method for manufacturing rolling bearing 100 has a preparing step S1, a nitriding treatment step S2, a quenching step S3, a cooling step S4, a tempering step S5, a post-treatment step S6, and an assembling step S7. However, when the nitrogen concentration at the rolling surface superficial layer of each of inner ring 10, outer ring 20, and rolling elements 30 is less than 0.01 mass percent, nitriding treatment step S2 is not performed.

In preparing step S1, members to be processed are prepared. The members to be processed are preferably made of a high carbon chromium bearing steel (for example, SUJ2, SUJ3) defined in the JIS standard. The members to be processed for inner ring 10 and outer ring 20 are ring-shaped, and the members to be processed for rolling elements 30 are spherical.

Nitriding treatment step S2 is performed after preparing step S1. Nitriding treatment step S2 is performed by heating and holding the members to be processed in an atmospheric gas containing a nitrogen source (for example, ammonia gas). A heating temperature in nitriding treatment step S2 is a temperature equal to or higher than an A₁ transformation point of the steel constituting the members to be processed. This heating temperature is equal to or higher than 800°C, for example. By performing the heating and holding in nitriding treatment step S2, nitrogen is introduced from surfaces of the members to be processed. Nitriding treatment step S2 is performed such that nitrogen is diffused to positions which will be a surface of inner ring 10, a surface of outer ring 20, and the surface of rolling element 30 after post-treatment step S6.

It should be noted that nitrogen introduced from the surfaces of the members to be processed reacts with an alloy element (for example, chromium) in the steel constituting the members to be processed, to form a precipitate. Due to a pinning effect of the precipitate, prior austenite grains formed when heating is performed in quenching step S3 are refined, and martensite grains formed when cooling is performed in quenching step S3 are refined.

Quenching step S3 is performed after nitriding treatment step S2. Quenching step S3 is performed by cooling the members to be processed from the temperature equal to or higher than the A₁ transformation point to a temperature equal to or lower than an M_{S} transformation point. Cooling step S4 is performed after quenching step S3. Cooling step S4 is sub-zero treatment or cryogenic treatment. In the sub-zero treatment, the members to be processed are cooled to a temperature of -99°C or higher and 0°C or lower. In the cryogenic treatment, the members to be processed are cooled to a temperature of -100°C or lower. By performing the sub-zero treatment and the cryogenic treatment, transformation to martensite in the steel progresses, and the amount of retained austenite in the steel decreases.

Tempering step S5 is performed after cooling step S4. Tempering step S5 is performed by heating and holding the members to be processed at a temperature lower than the A₁ transformation point. The heating temperature in tempering step S5 is 180°C, for example.

Post-treatment step S6 is performed after tempering step S5. In post-treatment step S6, machining (grinding, polishing) is performed on the surfaces of the members to be processed. Thereby, inner ring 10, outer ring 20, and rolling elements 30 are formed. Assembling step S7 is performed after post-treatment step S6. In assembling step S7, inner ring 10, outer ring 20, and rolling elements 30 are assembled together with cage 40, to form rolling bearing 100 having the structure shown in Fig. 1.

### (Configuration of Vehicle Drive Unit 200)

Hereinafter, a configuration of vehicle drive unit 200 will be described.

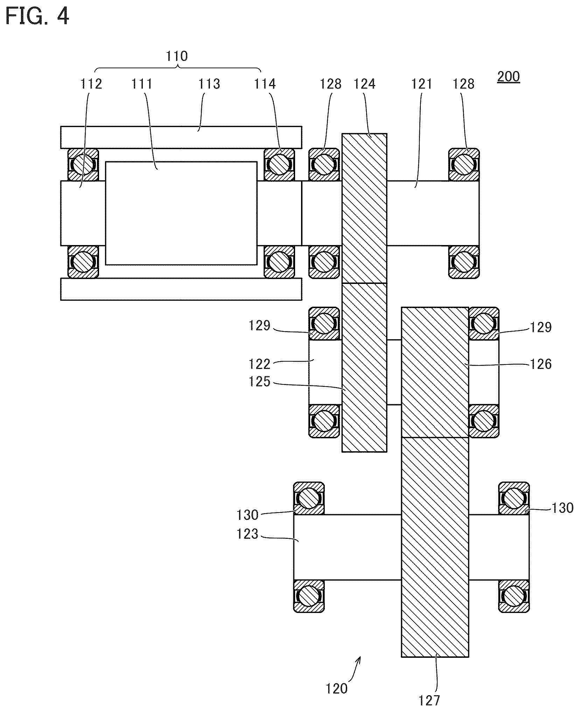

Fig. 4 is a cross sectional view of vehicle drive unit 200. As shown in Fig. 4, vehicle drive unit 200 has a motor 110 and a speed reducer 120.

Motor 110 has a motor main body 111, a rotation shaft 112, a motor housing 113, and rolling bearings 114. Motor main body 111 rotates rotation shaft 112 about a central axis of rotation shaft 112. Motor main body 111 is disposed inside motor housing 113. Rotation shaft 112 is supported by rolling bearings 114 so as to be rotatable about the central axis of rotation shaft 112. Rolling bearing 114 is a deep groove ball bearing, for example.

Speed reducer 120 has rotation shafts 121, 122, and 123, gears 124, 125, 126, and 127, and rolling bearings 128, 129, and 130. Rolling bearings 128, 129, and 130 are deep groove ball bearings, for example.

Rotation of rotation shaft 112 is transmitted to rotation shaft 121, and thereby rotation shaft 121 is rotated about the central axis of rotation shaft 112. Rotation shaft 121 is supported by rolling bearings 128 so as to be rotatable about a central axis of rotation shaft 121. Gear 124 is attached to rotation shaft 121 and rotates together with rotation shaft 121.

Rotation shaft 122 is supported by rolling bearings 129 so as to be rotatable about a central axis of rotation shaft 122. Gear 125 and gear 126 are attached to rotation shaft 122 and rotate together with rotation shaft 122. Gear 125 meshes with gear 124. Accordingly, rotation of rotation shaft 121 is transmitted to rotation shaft 122 by gear 124 and gear 125, and thereby rotation shaft 122 rotates. A gear ratio between gear 124 and gear 125 is adjusted such that a rotation speed of rotation shaft 122 is lower than a rotation speed of rotation shaft 121.

Rotation shaft 123 is supported by rolling bearings 130 so as to be rotatable about a central axis of rotation shaft 123. Gear 127 is attached to rotation shaft 123 and rotates together with rotation shaft 123. Gear 127 meshes with gear 126. Accordingly, rotation of rotation shaft 122 is transmitted to rotation shaft 123 by gear 126 and gear 127, and thereby rotation shaft 123 rotates. A gear ratio between gear 126 and gear 127 is adjusted such that a rotation speed of rotation shaft 123 is lower than the rotation speed of rotation shaft 122.

A hardness at a rolling surface of each of an inner ring, an outer ring, and rolling elements of rolling bearing 128 is lower than a hardness at a rolling surface of each of an inner ring, an outer ring, and rolling elements of rolling bearing 129. An amount of retained austenite at a rolling surface superficial layer of each of the inner ring and the outer ring of rolling bearing 128 is smaller than an amount of retained austenite at a rolling surface superficial layer of each of the inner ring and the outer ring of rolling bearing 129. A dislocation density of retained austenite at the rolling surface superficial layer of each of the inner ring and the outer ring of rolling bearing 128 is preferably higher than a dislocation density of retained austenite at the rolling surface superficial layer of each of the inner ring and the outer ring of rolling bearing 129.

The hardness at the rolling surface of each of the inner ring, the outer ring, and the rolling elements of rolling bearing 129 is preferably lower than a hardness at a rolling surface of each of an inner ring, an outer ring, and rolling elements of rolling bearing 130. The amount of retained austenite at the rolling surface superficial layer of each of the inner ring and the outer ring of rolling bearing 129 is preferably smaller than an amount of retained austenite at a rolling surface superficial layer of each of the inner ring and the outer ring of rolling bearing 130. The dislocation density of retained austenite at the rolling surface superficial layer of each of the inner ring and the outer ring of rolling bearing 129 is preferably higher than a dislocation density of retained austenite at the rolling surface superficial layer of each of the inner ring and the outer ring of rolling bearing 130.

A hardness at a rolling surface of each of an inner ring, an outer ring, and rolling elements of rolling bearing 114 is preferably lower than the hardness at the rolling surface of each of the inner ring, the outer ring, and the rolling elements of rolling bearing 129. An amount of retained austenite at a rolling surface superficial layer of each of the inner ring and the outer ring of rolling bearing 114 is preferably smaller than the amount of retained austenite at the rolling surface superficial layer of each of the inner ring and the outer ring of rolling bearing 129. A dislocation density of retained austenite at the rolling surface superficial layer of each of the inner ring and the outer ring of rolling bearing 114 is preferably higher than the dislocation density of retained austenite at the rolling surface superficial layer of each of the inner ring and the outer ring of rolling bearing 129.

Preferably, at least one of rolling bearing 129 and rolling bearing 130 is rolling bearing 100, and more preferably, rolling bearing 130 is rolling bearing 100. At least one of rolling bearing 114 and rolling bearing 128 may be rolling bearing 100.

### <Modification>

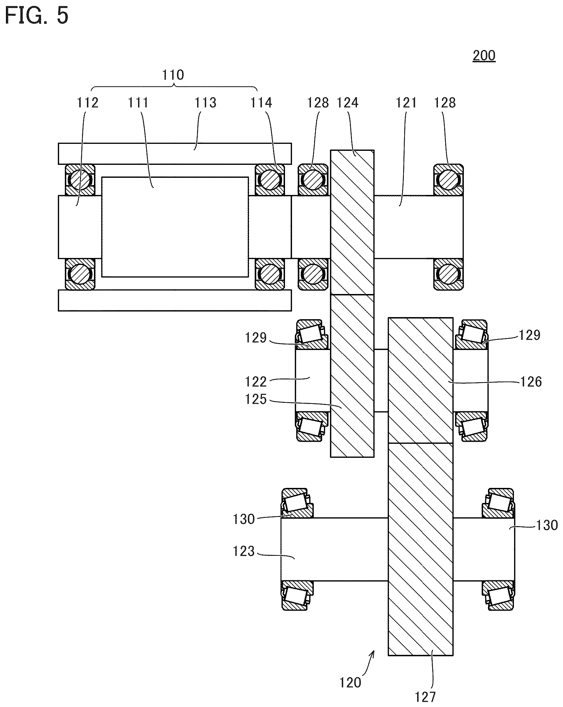

Fig. 5 is a cross sectional view of vehicle drive unit 200 according to a modification. As shown in Fig. 5, rolling bearings 129 and rolling bearings 130 may be tapered roller bearings.

### (Effect of Rolling Bearing 100)

Hereinafter, the effect of rolling bearing 100 will be described.

When rolling bearing 100 is used under poor lubrication conditions, an oil film thickness on the rolling surface of each of inner ring 10, outer ring 20, and rolling elements 30 may be reduced, and metal contact may occur between the rolling surface of inner ring 10 (outer ring 20) and the rolling surface of rolling element 30. In rolling bearing 100, since the dislocation density of retained austenite at the rolling surface superficial layer of each of inner ring 10, outer ring 20, and rolling elements 30 is 2.5×10¹⁴ m⁻² or more and 1.0×10¹⁷ m⁻² or less (3.5×10¹⁴ m⁻² or more and 1.0×10¹⁷ m⁻² or less), the hardness at the rolling surface of each of inner ring 10, outer ring 20, and rolling elements 30 is 800 Hv or more and 1245 Hv or less (760 Hv or more and 940 Hv or less). That is, in rolling bearing 100, plastic deformation is less likely to occur at the rolling surface of each of inner ring 10, outer ring 20, and rolling elements 30. Accordingly, in rolling bearing 100, even if metal contact occurs between the rolling surface of inner ring 10 (outer ring 20) and the rolling surface of rolling element 30, surface damage (formation and development of a crack) due to plastic deformation hardly occurs.

The fact that plastic deformation is less likely to occur at the rolling surface of each of inner ring 10, outer ring 20, and rolling elements 30 means that plastic deformation immediately below the rolling surface of each of inner ring 10, outer ring 20, and rolling elements 30 is reduced, and development of residual stress due to plastic deformation becomes slow. Therefore, according to rolling bearing 100, rolling fatigue life is also improved.

In rolling bearing 100, since the hardness at the rolling surface of each of inner ring 10, outer ring 20, and rolling elements 30 is high, an indentation due to biting of foreign matter is less likely to be formed at a contact portion between the rolling surface of inner ring 10 (outer ring 20) and the rolling surface of rolling element 30. Thus, according to rolling bearing 100, resistance to foreign matter is also improved.

In rolling bearing 100 (that is, in the case of a deep groove ball bearing), when a large axial load is applied, stress concentration due to riding on a shoulder may occur. Further, in rolling bearing 100 according to the modification (that is, in the case of a tapered roller bearing), stress concentration due to edge contact may occur at the rolling surface. As described above, in rolling bearing 100 and rolling bearing 100 according to the modification, since the hardness at the rolling surface of each of inner ring 10, outer ring 20, and rolling elements 30 is high and plastic deformation is less likely to occur, resistance to stress concentration due to riding on a shoulder or edge contact is improved.

When rolling bearing 100 is used at a high temperature, retained austenite in inner ring 10 and outer ring 20 is decomposed, and long-term dimensional change occurs in inner ring 10 and outer ring 20. When the amount of retained austenite at the rolling surface superficial layer of each of inner ring 10 and outer ring 20 is 5 volume percent or more and 30 volume percent or less (2 volume percent or more and 12 volume percent or less), long-term dimensional change of inner ring 10 and outer ring 20 associated with decomposition of retained austenite is suppressed. Thereby, it is not necessary to excessively tighten fitting with respect to a rotation shaft or a housing, and thus it is possible to suppress cracking of inner ring 10 and outer ring 20.

Further, since long-term dimensional change of inner ring 10 and outer ring 20 associated with decomposition of retained austenite is suppressed, rolling bearing 100 can continue stable rolling. Furthermore, since long-term dimensional change of inner ring 10 and outer ring 20 associated with decomposition of retained austenite is suppressed, creep between the rotation shaft and inner ring 10 is also suppressed, and thus contact of teeth of a gear attached to the rotation shaft can be maintained optimally, and quietness of the vehicle drive unit is ensured.

It should be noted that, since the hardness at the rolling surface of each of inner ring 10, outer ring 20, and rolling elements 30 is 800 Hv or more and 1245 Hv or less (760 Hv or more and 940 Hv or less) in rolling bearing 100, resistance to foreign matter is maintained even when the amount of retained austenite at the rolling surface superficial layer of each of inner ring 10, outer ring 20, and rolling elements 30 is small.

In rolling bearing 100, since cooling step S4 is performed when inner ring 10, outer ring 20, and rolling elements 30 are formed, a decrease in a dislocation density of martensite in tempering step S5 is less likely to occur. As a result, in inner ring 10, outer ring 20, and rolling elements 30, martensite having a high dislocation density surrounds the periphery of retained austenite, and the dislocation density of retained austenite surrounded by martensite having a high dislocation density also increases.

In retained austenite whose periphery is surrounded by martensite having a high dislocation density, volume expansion associated with decomposition is constrained by martensite having a high dislocation density around the periphery thereof. Accordingly, even if retained austenite is decomposed by using a high temperature, dimensional change associated with the decomposition is reduced. Thus, by setting the dislocation density of retained austenite at the rolling surface superficial layer of each of inner ring 10 and outer ring 20 to 2.5×10¹⁴ m⁻² or more and 1.0×10¹⁷ m⁻² or less (3.5×10¹⁴ m⁻² or more and 1.0×10¹⁷ m⁻² or less), long-term dimensional change of inner ring 10 and outer ring 20 associated with decomposition of retained austenite is further suppressed. The same applies to the case where the dislocation density of retained austenite at the rolling surface superficial layer of each of inner ring 10, outer ring 20, and rolling elements 30 is set to 5.0×10¹⁴ m⁻² or more and 1.0×10¹⁷ m⁻² or less.

It is known that a metal material subjected to processing has an increased dislocation density, and is strengthened through processing. However, when strengthening through processing is performed, it is necessary to perform special processing separately from an ordinary process for processing a rolling bearing, which leads to an increase in production energy and a complicated process. On the other hand, in inner ring 10, outer ring 20, and rolling elements 30, the dislocation density of retained austenite is increased to 2.5×10¹⁴ m⁻² or more and 1.0×10¹⁷ m⁻² or less (3.5×10¹⁴ m⁻² or more and 1.0×10¹⁷ m⁻² or less) by heat treatment (cooling step S4), and the same strengthening effect as that obtained through processing is obtained. It should be noted that precipitation strengthening and grain refinement strengthening using a special material and special heat treatment also cause an increase in production energy. Furthermore, applying a residual compressive stress to the rolling surface by special processing also requires introduction of a special process, which causes a complicated process. The same applies to the case where the dislocation density of retained austenite at the rolling surface superficial layer of each of inner ring 10, outer ring 20, and rolling elements 30 is set to 5.0×10¹⁴ m⁻² or more and 1.0×10¹⁷ m⁻² or less.

Since the nitrogen concentration at the rolling surface superficial layer of each of inner ring 10, outer ring 20, and rolling elements 30 is 0.25 mass percent or more (0.03 mass percent or more and 0.25 mass percent or less), rolling fatigue life is further improved. When the grain size number of prior austenite grains at the rolling surface superficial layer of each of inner ring 10, outer ring 20, and rolling elements 30 is 9 or more, the hardness at the rolling surface of each of inner ring 10, outer ring 20, and rolling elements 30 increases in association with refinement of crystal grains, and thus surface damage due to plastic deformation, rolling fatigue life, and resistance to foreign matter are further improved. When the steel constituting inner ring 10, outer ring 20, and rolling elements 30 is a high carbon chromium bearing steel defined in the JIS standard such as SUJ2 or SUJ3, the cost of rolling bearing 100 can be reduced, because a general steel can be used for inner ring 10, outer ring 20, and rolling elements 30.

### (Effect of Vehicle Drive Unit 200)

Hereinafter, the effect of vehicle drive unit 200 will be described.

Since the rotation speed of rotation shaft 121 is higher than the rotation speed of rotation shaft 122, rolling bearings 128 that support rotation shaft 121 are likely to have a temperature higher than that of rolling bearings 129 that support rotation shaft 122. That is, in rolling bearing 128, long-term dimensional change of the inner ring and the outer ring is more likely to occur than in rolling bearing 129.

On the other hand, since the rotation speed of rotation shaft 121 is higher than the rotation speed of rotation shaft 122, a load applied to rolling bearing 129 is larger than a load applied to rolling bearing 128, and rolling bearing 129 is likely to be lubricated more poorly than rolling bearing 128 (is likely to have an oil film thickness smaller than that of rolling bearing 128). As a result, metal contact is likely to occur between the rolling surface of the inner ring (the outer ring) and the rolling surface of the rolling element. That is, in rolling bearing 129, surface damage is likely to occur at the rolling surface of each of the inner ring, the outer ring, and the rolling elements.

In vehicle drive unit 200, since the hardness at the rolling surface superficial layer of each of the inner ring, the outer ring, and the rolling elements of rolling bearing 129 is higher than the hardness at the rolling surface superficial layer of each of the inner ring, the outer ring, and the rolling elements of rolling bearing 128, and the amount of retained austenite at the rolling surface superficial layer of each of the inner ring and the outer ring of rolling bearing 128 is smaller than the amount of retained austenite at the rolling surface superficial layer of each of the inner ring and the outer ring of rolling bearing 129, it is possible to suppress surface damage at the rolling surface of each of the inner ring, the outer ring, and the rolling elements of rolling bearing 129, while suppressing long-term dimensional change of the inner ring and the outer ring of rolling bearing 128.

Although the deep groove ball bearing and the tapered roller bearing are shown as examples of the rolling bearing used in vehicle drive unit 200 in the above description, the rolling bearing used in vehicle drive unit 200 is not limited thereto. The rolling bearing used in vehicle drive unit 200 may be, for example, a cylindrical roller bearing, an angular ball bearing, a tandem double-row angular ball bearing, or the like, or may be a bearing obtained by modifying a partial shape of one of these rolling bearings (for example, a tapered roller bearing with an inner ring small flange being omitted). That is, any rolling bearing can be applied to vehicle drive unit 200, regardless of its shape.

Although an integrally driven unit of a motor and a speed reducer constituted by three parallel shafts is shown as an example of vehicle drive unit 200 in the above description, vehicle drive unit 200 may have a four-shaft configuration, may be a speed reducer having a transmission gear, or may be a drive unit having a planetary gear. That is, the structure of vehicle drive unit 200 is not particularly limited as long as the rolling bearing of the present application is applied thereto.

### (Additional Aspects)

The present embodiment includes the following configurations.

### <Additional Aspect 1>

A rolling bearing that supports a rotation shaft of a vehicle drive unit, the rolling bearing comprising:
an inner ring, an outer ring, and a rolling element which are made of steel subjected to quenching and tempering, wherein
each of the inner ring, the outer ring, and the rolling element has a rolling surface, and
a dislocation density of retained austenite at a rolling surface superficial layer of at least one of the inner ring and the outer ring is 2.5×10¹⁴ m⁻² or more and 1.0×10¹⁷ m⁻² or less.

### <Additional Aspect 2>

The rolling bearing according to additional aspect 1, wherein a hardness at the rolling surface of at least one of the inner ring, the outer ring, and the rolling element is 800 Hv or more and 1245 Hv or less.

### <Additional Aspect 3>

The rolling bearing according to additional aspect 1 or 2, wherein a nitrogen concentration at the rolling surface superficial layer of the at least one of the inner ring and the outer ring is 0.25 mass percent or more.

### <Additional Aspect 4>

The rolling bearing according to any one of additional aspects 1 to 3, wherein the dislocation density of retained austenite at the rolling surface superficial layer of the at least one of the inner ring and the outer ring is 3.5×10¹⁴ m⁻² or more and 1.0×10¹⁷ m⁻² or less.

### <Additional Aspect 5>

The rolling bearing according to additional aspect 4, wherein a hardness at the rolling surface of at least one of the inner ring, the outer ring, and the rolling element is 760 Hv or more and 940 Hv or less.

### <Additional Aspect 6>

The rolling bearing according to additional aspect 4 or 5, wherein a nitrogen concentration at the rolling surface superficial layer of the at least one of the inner ring and the outer ring is 0.03 mass percent or more and 0.25 mass percent or less.

### <Additional Aspect 7>

The rolling bearing according to any one of additional aspects 1 to 6, wherein an amount of retained austenite at the rolling surface superficial layer of the at least one of the inner ring and the outer ring is 5 volume percent or more and 30 volume percent or less.

### <Additional Aspect 8>

The rolling bearing according to additional aspect 1, wherein the dislocation density of retained austenite at the rolling surface superficial layer of the at least one of the inner ring and the outer ring is 5.0×10¹⁴ m⁻² or more and 1.0×10¹⁷ m⁻² or less.

### <Additional Aspect 9>

The rolling bearing according to additional aspect 8, wherein an amount of retained austenite at the rolling surface superficial layer of the at least one of the inner ring and the outer ring is 2 volume percent or more and 12 volume percent or less.

### <Additional Aspect 10>

The rolling bearing according to additional aspect 8 or 9, wherein a hardness at the rolling surface of at least one of the inner ring, the outer ring, and the rolling element is 760 Hv or more and 900 Hv or less.

### <Additional Aspect 11>

The rolling bearing according to any one of additional aspects 8 to 10, wherein a nitrogen concentration at the rolling surface superficial layer of the at least one of the inner ring and the outer ring is less than 0.01 mass percent.

### <Additional Aspect 12>

A vehicle drive unit comprising:
a plurality of rotation shafts; and
a plurality of rolling bearings, wherein
each of the plurality of rolling bearings has an inner ring, an outer ring, and a rolling element which are made of steel subjected to quenching and tempering,
each of the inner ring, the outer ring, and the rolling element has a rolling surface,
the plurality of rotation shafts are respectively supported by the plurality of rolling bearings, and
when one of the plurality of rotation shafts having a lowest rotation speed is defined as a first rotation shaft, and the plurality of rotation shafts other than the first rotation shaft are defined as second rotation shafts, a dislocation density of retained austenite at a rolling surface superficial layer of at least one of the outer ring, the inner ring, and the rolling element of at least one of the plurality of rolling bearings that support the second rotation shafts is 2.5×10¹⁴ m⁻² or more and 1.0×10¹⁷ m⁻² or less.

### <Additional Aspect 13>

The vehicle drive unit according to additional aspect 12, wherein a hardness at the rolling surface of the at least one of the outer ring, the inner ring, and the rolling element of the at least one of the plurality of rolling bearings that support the second rotation shafts is 800 Hv or more and 1245 Hv or less.

### <Additional Aspect 14>

The vehicle drive unit according to additional aspect 12 or 13, wherein a nitrogen concentration at the rolling surface superficial layer of the at least one of the outer ring, the inner ring, and the rolling element of the at least one of the plurality of rolling bearings that support the second rotation shafts is 0.25 mass percent or more.

### <Additional Aspect 15>

The vehicle drive unit according to any one of additional aspects 12 to 14, wherein the dislocation density of retained austenite at the rolling surface superficial layer of the at least one of the outer ring, the inner ring, and the rolling element of the at least one of the plurality of rolling bearings that support the second rotation shafts is 3.5×10¹⁴ m⁻² or more and 1.0×10¹⁷ m⁻² or less.

### <Additional Aspect 16>

The vehicle drive unit according to additional aspect 15, wherein a hardness at the rolling surface of the at least one of the outer ring, the inner ring, and the rolling element of the at least one of the plurality of rolling bearings that support the second rotation shafts is 760 Hv or more and 940 Hv or less.

### <Additional Aspect 17>

The vehicle drive unit according to additional aspect 15 or 16, wherein a nitrogen concentration at the rolling surface superficial layer of the at least one of the outer ring, the inner ring, and the rolling element of the at least one of the plurality of rolling bearings that support the second rotation shafts is 0.03 mass percent or more and 0.25 mass percent or less.

### <Additional Aspect 18>

The vehicle drive unit according to any one of additional aspects 12 to 17, wherein an amount of retained austenite at the rolling surface superficial layer of the at least one of the outer ring, the inner ring, and the rolling element of the at least one of the plurality of rolling bearings that support the second rotation shafts is 5 volume percent or more and 30 volume percent or less.

### <Additional Aspect 19>

The vehicle drive unit according to additional aspect 12, wherein the dislocation density of retained austenite at the rolling surface superficial layer of the at least one of the outer ring, the inner ring, and the rolling element of the at least one of the plurality of rolling bearings that support the second rotation shafts is 5.0×10¹⁴ m⁻² or more and 1.0×10¹⁷ m⁻² or less.

### <Additional Aspect 20>

The vehicle drive unit according to additional aspect 19, wherein an amount of retained austenite at the rolling surface superficial layer of the at least one of the outer ring, the inner ring, and the rolling element of the at least one of the plurality of rolling bearings that support the second rotation shafts is 2 volume percent or more and 12 volume percent or less.

### <Additional Aspect 21>

The vehicle drive unit according to additional aspect 19 or 20, wherein a hardness at the rolling surface of the at least one of the outer ring, the inner ring, and the rolling element of the at least one of the plurality of rolling bearings that support the second rotation shafts is 760 Hv or more and 900 Hv or less.

### <Additional Aspect 22>

The vehicle drive unit according to any one of additional aspects 19 to 21, wherein a nitrogen concentration at the rolling surface superficial layer of the at least one of the outer ring, the inner ring, and the rolling element of the at least one of the plurality of rolling bearings that support the second rotation shafts is less than 0.01 mass percent.

Although the embodiment of the present invention has been described above, the above-described embodiment can be variously modified. Further, the scope of the present invention is not limited to the above-described embodiment. The scope of the present invention is defined by the scope of the claims, and is intended to include any modifications within the scope and meaning equivalent to the scope of the claims.

### REFERENCE SIGNS LIST

100: rolling bearing; 10: inner ring; 10a: first width surface; 10b: second width surface; 10c: inner diameter surface; 10d: outer diameter surface; 10da: raceway surface; 20: outer ring; 20a: first width surface; 20b: second width surface; 20c: inner diameter surface; 20ca: raceway surface; 20d: outer diameter surface; 30: rolling element; 30a: surface; 40: cage; 110: motor; 111: motor main body; 112: rotation shaft; 113: motor housing; 114: rolling bearing; 120: speed reducer; 121, 122, 123: rotation shaft; 124, 125, 126, 127: gear; 128, 129, 130: rolling bearing; 200: vehicle drive unit; A: central axis; S1: preparing step; S2: nitriding treatment step; S3: quenching step; S4: cooling step; S5: tempering step; S6: post-treatment step; S7: assembling step.

## Claims

1. A rolling bearing that supports a rotation shaft of a vehicle drive unit, the rolling bearing comprising:
an inner ring, an outer ring, and a rolling element which are made of steel subjected to quenching and tempering, wherein
each of the inner ring, the outer ring, and the rolling element has a rolling surface, and
a dislocation density of retained austenite at a rolling surface superficial layer of at least one of the inner ring and the outer ring is 2.5×10¹⁴ m⁻² or more and 1.0×10¹⁷ m⁻² or less.

2. The rolling bearing according to claim 1, wherein a hardness at the rolling surface of at least one of the inner ring, the outer ring, and the rolling element is 800 Hv or more and 1245 Hv or less.

3. The rolling bearing according to claim 1, wherein a nitrogen concentration at the rolling surface superficial layer of the at least one of the inner ring and the outer ring is 0.25 mass percent or more.

4. The rolling bearing according to claim 1, wherein the dislocation density of retained austenite at the rolling surface superficial layer of the at least one of the inner ring and the outer ring is 3.5×10¹⁴ m⁻² or more and 1.0×10¹⁷ m⁻² or less.

5. The rolling bearing according to claim 4, wherein a hardness at the rolling surface of at least one of the inner ring, the outer ring, and the rolling element is 760 Hv or more and 940 Hv or less.

6. The rolling bearing according to claim 4, wherein a nitrogen concentration at the rolling surface superficial layer of the at least one of the inner ring and the outer ring is 0.03 mass percent or more and 0.25 mass percent or less.

7. The rolling bearing according to any one of claims 1 to 6, wherein an amount of retained austenite at the rolling surface superficial layer of the at least one of the inner ring and the outer ring is 5 volume percent or more and 30 volume percent or less.

8. The rolling bearing according to claim 1, wherein the dislocation density of retained austenite at the rolling surface superficial layer of the at least one of the inner ring and the outer ring is 5.0×10¹⁴ m⁻² or more and 1.0×10¹⁷ m⁻² or less.

9. The rolling bearing according to claim 8, wherein an amount of retained austenite at the rolling surface superficial layer of the at least one of the inner ring and the outer ring is 2 volume percent or more and 12 volume percent or less.

10. The rolling bearing according to claim 8, wherein a hardness at the rolling surface of at least one of the inner ring, the outer ring, and the rolling element is 760 Hv or more and 900 Hv or less.

11. The rolling bearing according to any one of claims 8 to 10, wherein a nitrogen concentration at the rolling surface superficial layer of the at least one of the inner ring and the outer ring is less than 0.01 mass percent.

12. A vehicle drive unit comprising:
a plurality of rotation shafts; and
a plurality of rolling bearings, wherein
each of the plurality of rolling bearings has an inner ring, an outer ring, and a rolling element which are made of steel subjected to quenching and tempering,
each of the inner ring, the outer ring, and the rolling element has a rolling surface,
the plurality of rotation shafts are respectively supported by the plurality of rolling bearings, and
when one of the plurality of rotation shafts having a lowest rotation speed is defined as a first rotation shaft, and the plurality of rotation shafts other than the first rotation shaft are defined as second rotation shafts, a dislocation density of retained austenite at a rolling surface superficial layer of at least one of the outer ring, the inner ring, and the rolling element of at least one of the plurality of rolling bearings that support the second rotation shafts is 2.5×10¹⁴ m⁻² or more and 1.0×10¹⁷ m⁻² or less.

13. The vehicle drive unit according to claim 12, wherein a hardness at the rolling surface of the at least one of the outer ring, the inner ring, and the rolling element of the at least one of the plurality of rolling bearings that support the second rotation shafts is 800 Hv or more and 1245 Hv or less.

14. The vehicle drive unit according to claim 12, wherein a nitrogen concentration at the rolling surface superficial layer of the at least one of the outer ring, the inner ring, and the rolling element of the at least one of the plurality of rolling bearings that support the second rotation shafts is 0.25 mass percent or more.

15. The vehicle drive unit according to claim 12, wherein the dislocation density of retained austenite at the rolling surface superficial layer of the at least one of the outer ring, the inner ring, and the rolling element of the at least one of the plurality of rolling bearings that support the second rotation shafts is 3.5×10¹⁴ m⁻² or more and 1.0×10¹⁷ m⁻² or less.

16. The vehicle drive unit according to claim 15, wherein a hardness at the rolling surface of the at least one of the outer ring, the inner ring, and the rolling element of the at least one of the plurality of rolling bearings that support the second rotation shafts is 760 Hv or more and 940 Hv or less.

17. The vehicle drive unit according to claim 15, wherein a nitrogen concentration at the rolling surface superficial layer of the at least one of the outer ring, the inner ring, and the rolling element of the at least one of the plurality of rolling bearings that support the second rotation shafts is 0.03 mass percent or more and 0.25 mass percent or less.

18. The vehicle drive unit according to any one of claims 12 to 17,
wherein an amount of retained austenite at the rolling surface superficial layer of the at least one of the outer ring, the inner ring, and the rolling element of the at least one of the plurality of rolling bearings that support the second rotation shafts is 5 volume percent or more and 30 volume percent or less.

19. The vehicle drive unit according to claim 12, wherein the dislocation density of retained austenite at the rolling surface superficial layer of the at least one of the outer ring, the inner ring, and the rolling element of the at least one of the plurality of rolling bearings that support the second rotation shafts is 5.0×10¹⁴ m⁻² or more and 1.0×10¹⁷ m⁻² or less.

20. The vehicle drive unit according to claim 19, wherein an amount of retained austenite at the rolling surface superficial layer of the at least one of the outer ring, the inner ring, and the rolling element of the at least one of the plurality of rolling bearings that support the second rotation shafts is 2 volume percent or more and 12 volume percent or less.

21. The vehicle drive unit according to claim 19, wherein a hardness at the rolling surface of the at least one of the outer ring, the inner ring, and the rolling element of the at least one of the plurality of rolling bearings that support the second rotation shafts is 760 Hv or more and 900 Hv or less.

22. The vehicle drive unit according to any one of claims 19 to 21, wherein a nitrogen concentration at the rolling surface superficial layer of the at least one of the outer ring, the inner ring, and the rolling element of the at least one of the plurality of rolling bearings that support the second rotation shafts is less than 0.01 mass percent.
